# EUROPÄISCHE PATENTSCHRIFT

(11) **EP 0 855 205 B1**
(45) Veröffentlichungstag und Bekanntmachung des Hinweises auf die Patenterteilung: **02.04.2003**
(21) Anmeldenummer: 97122608.9
(22) Anmeldetag: 22.12.1997
(51) Int. Cl.: B01D 1/00, B01D 29/68

(54) **Filter für Verunreinigungen enthaltende Flüssigkeiten**
Filter for liquids containing contaminants
Filtre pour liquides contenant des contaminants

(30) Priorität: 28.12.1996 DE 19654666
(43) Veröffentlichungstag der Anmeldung: 29.07.1998
(73) Patentinhaber: MAHLE Filtersysteme GmbH, 70376 Stuttgart (DE)
(72) Erfinder: Geisbauer, Heinz, 74629 Untersteinbach (DE)
(74) Vertreter: Patentanwalts-Partnerschaft, Rotermund + Pfusch + Bernard

(56) Entgegenhaltungen:
- DE-A- 4 320 952
- DE-C- 4 400 485
- GB-A- 1 485 989
- GB-A- 2 232 903

## Beschreibung

Die Erfindung bezieht sich auf ein Filter für Verunreinigungen enthaltende Flüssigkeiten, insbesondere verunreinigte Kühl-Schmierstoffe-Suspensionen, mit einem etwa kreiszylindrischen Filtergehäuse und mit darin etwa achsparallel zu letzterem angeordnetem, etwa kreiszylindrischem Filterkörper, der zusammen mit an dessen beiden Enden vorgesehenen Abdeckungen einen äußeren Zuströmraum mit Zuströmeinlaß von einem inneren Abströmraum mit Abströmauslaß trennt, wobei die Außenfläche des drehantreibbaren Filterkörpers durch Rückspülung der Flüssigkeit aus dem Abströmraum in einen in dem Filtergehäuse ortsfest gelagerten Rückspülkanal, der sich über die Länge des Filterkörpers erstreckt und an dessen Außenfläche federnd anliegt, von abgelagerten Verunreinigungen abreinigbar ist, und wobei in dem unteren Bereich des Filtergehäuses ein schließbarer Auslaß für abgeschiedene Verunreinigungen vorgesehen ist.

Bei bekannten Filtern dieser Art (DE 32 09 216 A1, EP 0 577 941 A1, DE 44 00 485 C1), wird der Rückspülkanal durch Federn in dem Zuströmraum gehalten und gegen die Außenfläche des Filterkörpers gedrückt. Zugleich steht der Rückspülkanal unter der Wirkung des Druckes der in dem Zuströmraum befindlichen Flüssigkeit, die eine radial auf den Filterkörper gerichtete Druckkomponente auf den Rückspülkanal ausübt. Diese Druckkomponente nimmt mit bei fortschreitender Filterung zunehmendem Druck der Flüssigkeit in den Zuströmraum zu und erhöht den Druck, mit dem der Rückspülkanal an der Außenfläche des Filterkörpers anliegt. Außerdem kann ein in dem Rückspülkanal herrschender Druck auf eine der Außenfläche des Filterkörpers zugewandte, gelochte Begrenzungswand des Rückspülkanals den Druck erhöhen, mit dem der Rückspülkanal auf der Außenfläche des Filterkörpers anliegt. Durch diese Einflüsse wird dem Drehen des Filterkörpers ein zunehmender Widerstand entgegengesetzt. Dies ist nachteilig an den bekannten Filtern.

Es ist Aufgabe der Erfindung, ein unerwünschtes und unkontrolliertes Ansteigen des Druckes, mit dem der Rückspülkanal an der Außenfläche des Filterkörpers anliegt, zu vermeiden.

Diese Aufgabe ist bei einem Filter der eingangs genannten Art dadurch gelöst, daß der Rückspülkanal ein federnd an der Außenfläche des Filterkörpers anliegendes, gelochtes Anlageelement und ein letzteres aufnehmendes Kanalelement aufweist, das starr im Filtergehäuse gelagert ist. Durch die erfindungsgemäß verwirklichte Trennung des Kanalelementes und des Anlagelementes kann der Einfluß des auf den Rückspülkanal wirkenden Druckes der Flüssigkeit in dem Zuströmraum und des in dem Rückspülkanal herrschenden Druckes auf den Druck, mit dem der Rückspülkanal an der Außenfläche des Filterkörpers anliegt, ausgeschlossen oder zumindest vermindert werden.

Diese Trennung der beiden Elemente des Rückspülkanals kann auf verschiedene Weise verwirklicht werden.

Die erste Möglichkeit besteht darin, daß das Anlageelement aus federelastischem Werkstoff besteht und am Kanalelement gehaltert ist. Hierbei bleibt der von außen auf das Kanalelement wirkende Druck der Flüssigkeit in dem Zuströmraum ohne Einfluß, jedoch kann der in dem Rückspülkanal herrschende Druck und damit dessen Einfluß beeinflußt werden.

Die zweite Möglichkeit besteht darin, daß das Anlageelement in dem Kanalelement in Radialrichtung zu dem Filterkörper beweglich gelagert ist, gegenüber dem Kanalelement abgedichtet ist und in Radialrichtung auf den Filterkörper zu unter der Wirkung mindestens einer an dem Kanalelement abgestützten Druckfeder steht. Hierbei bleibt der von außen auf das Kanalelement wirkende Druck der Flüssigkeit in dem Zuströmraum ebenfalls ohne Einfluß, und der in dem Rückspülkanal herrschende Druck und dessen Einfluß kann ebenfalls beeinflußt werden. Dabei ist eine Ausführung vorteilhaft, bei der die Beweglichkeit des Anlagelementes gegenüber dem Kanalelement in Radialrichtung zu dem Filterkörper durch Anschläge an dem Kanalelement begrenzt ist.

Um bei einem kontinuierlichen oder intermittierenden Rückspülen des Filterkörpers mit Abfuhr der Verunreinigungen durch den Rückspülkanal und den letzterem nachgeschalteten Auslaß die Druckverhältnisse beeinflussen zu können, kann an den Rückspülkanal ein Auslaß für Verunreinigungen angeschlossen sein, der ein schaltbares Ventil und/oder ein einstellbares Rückschlagventil enthält.

Bei kontinuierlichem Rückspülen rotiert der Filterkörper ständig, das Ventil ist geöffnet und durch das einstellbare Rückschlagventil wird die aus dem Rückspülkanal abströmende Menge und damit der Druck P₃ in dem Rückspülkanal eingestellt. Die Differenz dieses Druckes P₃ zu dem im Inneren des Filterkörpers herrschenden Druck P₂ wird unter Berücksichtigung der Kraft der mindestens einen Feder so eingestellt, daß das Anlageelement mit dem gewünschten Druck an der Außenfläche des Filterkörpers anliegt.

Bei intermittierendem Rückspülen steht der Filterkörper zunächst still und das Ventil ist geschlossen, so daß aus dem Rückspülkanal nichts abströmen kann. Der in dem Rückspülkanal herrschende Druck P₃ und der im Inneren des Filterkörpers herrschende Druck P₂ sind gleich. Folglich liegt das Anlageelement nur unter der Wirkung der Kraft der mindestens einen Druckfeder an der Außenfläche des Filterkörpers an. Bei Beginn eines Rückspülvorganges beginnt der Filterkörper zu rotieren und danach wird das Ventil geöffnet. Der Druck P3 in dem Rückspülkanal wird dann ebenso und unter gleichen Bedingungen wie bei kontinuierlichem Rückspülen eingestellt.

Das einstellbare Rückschlagventil kann auch durch eine einstellbare Drossel ersetzt sein.

Entsprechend einer bevorzugten Ausführungsform kann am Kanalelement wenigstens ein justierbares Distanzelement angebracht sein, daß mit dem Anlageelement unter Ausbildung eines Anschlages zusammenwirkt, derart, daß in Radialrichtung vom Filterkörper weggerichtete Verstellbewegungen des Anlageelementes auf ein durch die Justierung des Distanzelementes bestimmtes Maß begrenzt sind. Beispielsweise kann dabei das Distanzelement als Bolzenschraube ausgebildet sein, die das Kanalelement in einer Gewindebohrung durchdringt, wobei das in den Rückspülkanal hineinragende Ende der Bolzenschraube mit einem Stützelement zusammenwirkt, welches das daran anliegende und/oder gehalterte Anlageelement mit Hilfe von Federmitteln gegen den Filterkörper vorspannt. Durch einen Stoß des Filterkörpers gegen das Anlageelement oder durch einen plötzlichen Druckabfall im Rückspülkanal kann das Anlageelement radial bezüglich des Filterkörpers gegen das Kanalelement verstellt werden. Um Beschädigungen des Anlageelementes und/oder anderer Bestandteile der Rückspüleinrichtung bzw. des Filters anläßlich einer derartigen, unkontrollierten Verstellbewegung des Anlageelementes zu verhindern, wird die Verstellmöglichkeit des Anlageelementes durch einen mit Hilfe des vorgeschlagenen Distanzelementes ausgebildeten Anschlag begrenzt. Das insoweit als Sicherheitselement dienende Distanzelement erhöht somit effektiv die Standzeit bzw. Lebensdauer des erfindungsgemäßen Filters.

In der Zeichnung sind fünf Ausführungsbeispiele für Filter nach der Erfindung schematisch in der Form von Teilschnitten quer zu der Achse des Filterkörpers dargestellt.

Innerhalb eines Filtergehäuses 1 ist achsparallel dazu ein Filterkörper 2 drehbar gelagert. Ferner sind innerhalb des Filtergehäuses 1, z.B. in einem Zuströmraum 8, Tragelemente 4 für einen Rückspülkanal 3 raumfest angeordnet. Der Rückspülkanal 3 besteht jeweils aus einem Kanalelement 5 und einem daran abgestützten Anlageelement 6, das in Radialrichtung zu dem Filterkörper 2 federnd an dessen Außenfläche anliegt.

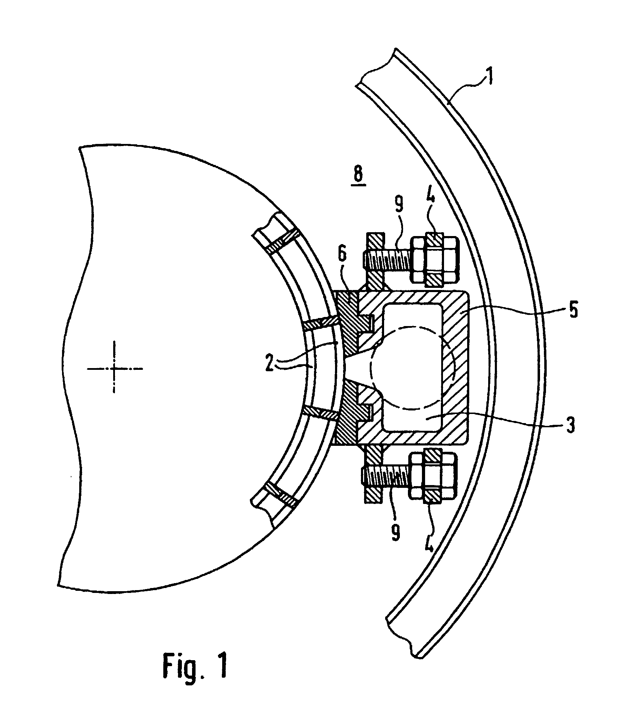

Bei dem Ausführungsbeispiel nach Fig. 1 ist das Kanalelement 5 mittels Schraubbolzen 9 starr an den Tragelementen 4 befestigt. Das aus federelastischem Werkstoff bestehende Anlageelement 6 ist an dem Kanalelement 5 befestigt.

Bei den Ausführungsbeispielen nach Fig. 2 bis 5 ist jeweils das Kanalelement 5 ebenfalls mittels Schraubbolzen 10 (in Fign. 4 und 5 nicht dargestellt) starr an den Tragelementen 4 befestigt. Das Anlageelement 6 ist jeweils in Radialrichtung zu dem Filterkörper 2 verschieblich im bzw. am Kanalelement 5 gelagert. Auf der von dem Filterkörper 2 abgewandten Seite des Anlageelementes 6 sind jeweils zwei Druckfedern 11 abgestützt, die anderenends jeweils in und an dem Kanalelement 5 abgestützt sind.

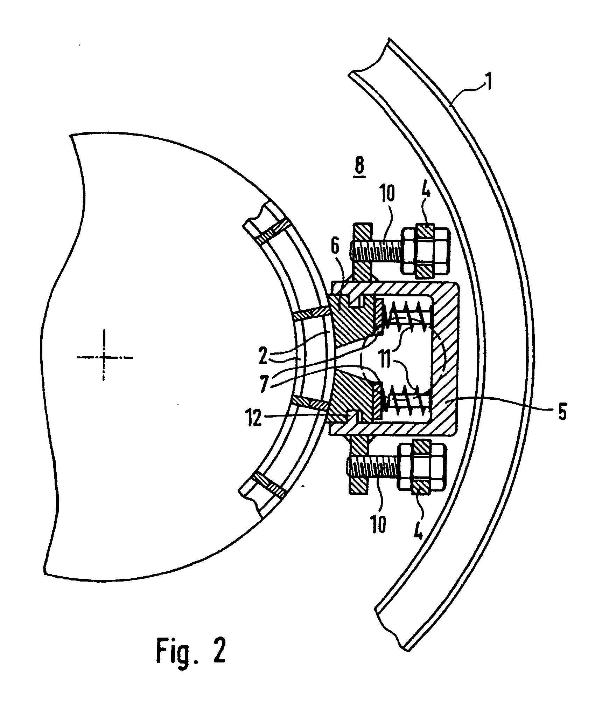

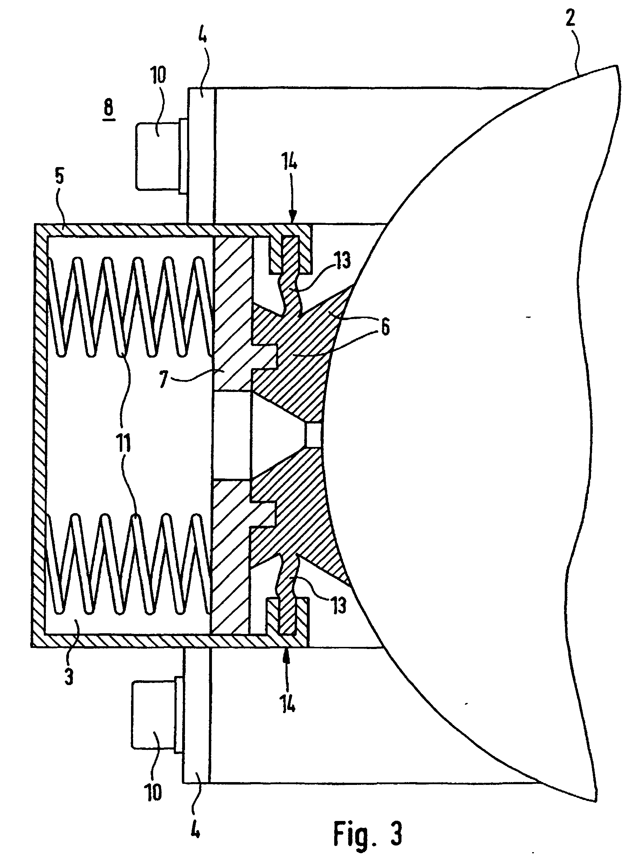

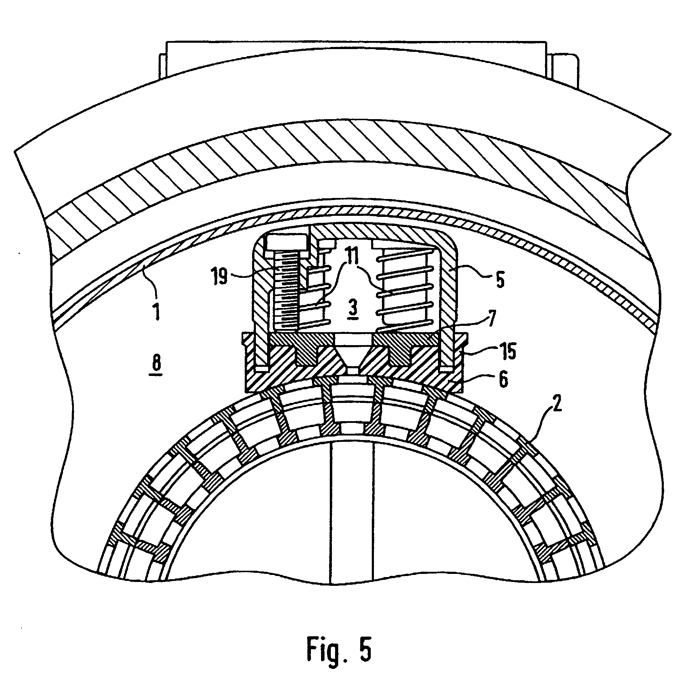

Bei den Ausführungsbeispielen nach den Fign. 2, 3 und 5 ist zwischen den Druckfedern 11 und dem Anlageelement 6 ein Stützelement 7 angeordnet, das zur gleichmäßigen Verteilung der Federkräfte am Anlageelement 6 flächig anliegt und z.B. durch eine Nut-Feder-Verbindung (Fign. 3 und 5) daran gehaltert ist.

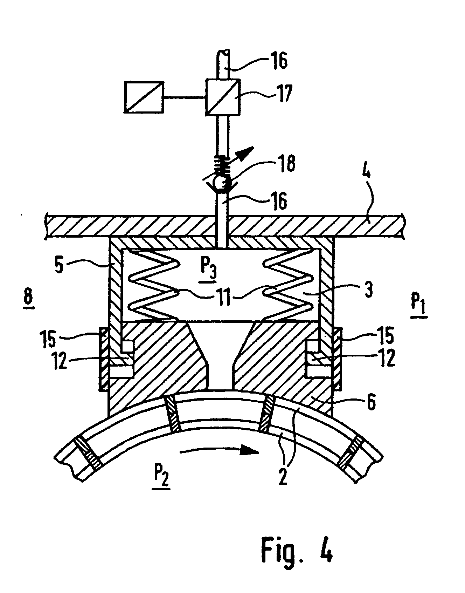

Bei den Ausführungsbeispielen nach Fign. 2 und 4 sind an den dem Filterkörper 2 zugewandten Schenkeln des Kanalelementes 5 jeweils nach innen weisende Anschläge 12 vorgesehen, die jeweils in zugeordnete Ausnehmungen in dem Anlageelement 6 eingreifen und den Hub des Anlageelementes 6 gegenüber dem Kanalelement 5 begrenzen.

In dem Ausführungsbeispiel nach Fig. 2 können die Schraubbolzen 10 derart ausgebildet sein, daß diese eine Positionierung des Kanalelementes 5 ermöglichen, um beispielsweise eine Abnutzung des Anlageelementes 6 durch eine entsprechende Justierung der Schraubbolzen 10 auszugleichen.

Bei dem Ausführungsbeispiel nach Fig. 3 sind an dem Anlageelement 6 seitlich elastische Rippen 13 vorgesehen, die dichtend in Befestigungselementen 14 an dem Filterkörper 2 zugewandten Enden der Schenkel des Kanalelementes 6 aufgenommen sind. Diese Befestigungselemente 14 dienen gleichzeitig als Anschläge für das Anlageelement 6.

Bei dem Ausführungsbeispiel nach Fig. 4 sind außen an den dem Filterkörper 2 zugewandten Enden der Schenkel des Kanalelementes 5 Dichtstreifen 15 befestigt. Die Dichtstreifen 15 können bei einer bevorzugten Ausführungsform einteilig mit dem Anlageelement 6 hergestellt sein. Da der im Zuströmraum 8 herrschende Druck P₁ größer ist als der Druck P₃ im Rückspülkanal 3, werden die Dichtstreifen 15 dichtend gegen die Schenkel des Kanalelementes 5 angedrückt.

Außerdem ist in Fig. 4 schematisch gezeigt, daß an das Innere des Rückspülkanals 3 ein Auslaß 16 für Verunreinigungen angeschlossen ist, der ein schaltbares Ventil 17 und ein einstellbares Rückschlagventil 18 enthält.

Bei dem Ausführungsbeispiel nach Fig. 5 sind die Dichtstreifen 15 einteilig mit dem Anlageelement 6 hergestellt, wobei am Anlageelement 6 eine rinnenförmige Vertiefung ausgebildet ist, in welche die Schenkel des Kanalelementes 5 hineinragen. Aufgrund der oben geschilderten Druckverhältnisse liegen auch hier die Dichtstreifen 15 abdichtend an der Außenseite der Schenkel des Kanalelementes 5 an.

Außerdem ist in dem in Fig. 5 dargestellten Ausführungsbeispiel eine Bolzenschraube 19 vorgesehen, die durch eine entsprechende Gewindebohrung das Kanalelement 5 durchdringt und mit einem axialen Ende in den Rückspülkanal 3 hineinragt. Die im dargestellten Beispiel parallel zur Radialrichtung des Filterkörpers 2 ausgerichtete Bolzenschraube 19 bildet an ihrem in den Rückspülkanal 3 hineinragenden axialen Ende einen Anschlag, der in Radialrichtung des Filterkörpers 2 verlaufende, von diesem wegführende Bewegungen des Anlageelementes 6 begrenzt. Dabei wirkt das betreffende axiale Ende der Bolzenschraube 19 mit dem Stützelement 7 dahingehend zusammen, daß dieses bei Erreichen der maximal zulässigen Verstellbewegung des Anlageelementes 6 an der Bolzenschraube 19 zur Anlage kommt.

## Patentansprüche

1. Filter für Verunreinigungen enthaltende Flüssigkeiten, insbesondere verunreinigte Kühl-Schmierstoff-Suspensionen, mit einem etwa kreiszylindrischen Filtergehäuse und mit darin etwa achsparallel zu letzterem angeordnetem, etwa kreiszylindrischem drehantriebbarem Filterkörper, der zusammen mit an dessen beiden Enden vorgesehenen Abdeckungen einen äußeren Zuströmraum mit Zuströmeinlaß von einem inneren Abströmraum mit Abströmauslaß trennt, wobei die Außenfläche des drehantreibbaren Filterkörpers durch Rückspülung der Flüssigkeit aus dem Abströmraum in einen in dem Filtergehäuse ortsfest gelagerten Rückspülkanal, der sich über die Länge des Filterkörpers erstreckt und an dessen Außenfläche federnd anliegt, von abgelagerten Verunreinigungen abreinigbar ist, und wobei in dem unteren Bereich des Filtergehäuses ein schließbarer Auslaß für abgeschiedene Verunreinigungen vorgesehen ist,
**dadurch gekennzeichnet,**
**daß** der Rückspülkanal (3) ein federnd an der Außenfläche des Filterkörpers (2) anliegendes, gelochtes Anlageelement (6) und ein letzteres aufnehmendes Kanalelement (5) aufweist, das starr im Filtergehäuse (1) gelagert ist.

2. Filter nach Anspruch 1,
**dadurch gekennzeichnet,**
**daß** das Anlageelement (6) aus federelastischen Werkstoff besteht und am Kanalelement (5) befestigt ist.

3. Filter nach Anspruch 1,
**dadurch gekennzeichnet,**
**daß** das Anlageelement (6) in dem Kanalelement (5) in Radialrichtung zu dem Filterkörper (2) beweglich gelagert ist, gegenüber dem Kanalelement (5) abgedichtet ist und in Radialrichtung auf den Filterkörper (2) zu unter der Wirkung mindestens einer an dem Kanalelement (5) abgestützten Druckfeder (11) steht.

4. Filter nach Anspruch 3,
**dadurch gekennzeichnet,**
**daß** die Beweglichkeit des Anlageelementes (6) gegenüber dem Kanalelement (5) in Radialrichtung zu dem Filterkörper (2) durch Anschläge (12, 14) an dem Kanalelement (5) begrenzt ist.

5. Filter nach einem der Ansprüche 1 bis 4,
**dadurch gekennzeichnet,**
**daß** an den Rückspülkanal (3) ein Auslaß (16) für Verunreinigungen angeschlossen ist der ein schaltbares Ventil (17) und/oder ein einstellbares Rückschlagventil (18) enthält.

6. Filter nach einem der Ansprüche 1, 3 bis 5
**dadurch gekennzeichnet,**
**daß** am Kanalelement (5) wenigstens ein justierbares Distanzelement (19) angebracht ist, das mit dem Anlageelement (6) unter Ausbildung eines Anschlages zusammenwirkt, dahingehend, daß in Radialrichtung vom Filterkörper (2) weggerichtete Verstellbewegungen des Anlageelementes (6) auf ein justiertes Maß begrenzt sind.

7. Filter nach Anspruch 6,
**dadurch gekennzeichnet,**
**daß** das Distanzelement als Bolzenschraube (19) ausgebildet ist, die das Kanalelement (5) in einer Gewindebohrung durchdringt, wobei das in dem Rückspülkanal (3) hineinragende Ende der Bolzenschraube (19) mit einem Stützelement (7) zusammenwirkt, welches das daran anliegende und/oder gehalterte Anlageelement (6) durch Federmittel (11) gegen den Filterkörper (2) vorspannt.

## Claims

1. A filter for liquids containing contaminants, in particular for contaminated coolant-lubricant suspensions, comprising an approximately circular-cylindrical rotary drivable filter body which together with covers provided at its two ends separates an exterior feed space with a feed inlet from an interior discharge space with discharge outlet, wherein the exterior surface of the rotary drivable filter body can be cleaned of deposited contaminants as a result of backwash of the liquid from the discharge space into a backwash channel which is held so as to be stationary and which extends along the length of the filter body and which resiliently rests against the exterior surface of said filter body, and wherein a closable outlet for separated contaminants is provided in the lower region of the filter housing,
**characterised in that**
the backwash channel (3) comprises a perforated close-fitting element (6) which resiliently rests against the exterior surface of the filter body (2), and comprises a channel element (5) which accommodates said perforated close-fitting element (6), said channel element (5) being rigidly held in the filter housing (1).

2. The filter according to claim 1,
**characterised in that**
the close-fitting element (6) comprises spring-elastic material and is held at the channel element (5).

3. The filter according to claim 1,
**characterised in that**
the close-fitting element (6) is movably held in the channel element (5) in radial direction relative to the filter body (2); is sealed off in relation to the channel element (5); and in radial direction towards the filter body (2) is affected by at least one pressure spring (11) supported on the channel element (5).

4. The filter according to claim 3,
**characterised in that**
mobility of the close-fitting element (6) relative to the channel element (5) is limited in radial direction towards the filter body (2) by means of end stops (12, 14) on the channel element (5).

5. The filter according to any one of claims 1 to 4,
**characterised in that**
an outlet (16) for contamination is connected to the backwash channel (3), said outlet comprising a switchable valve (17) and/or an adjustable nonreturn valve (18).

6. The filter according to any one of claims 1, 3 to 5,
**characterised in that**
at least one adjustable distance element (19) is fitted to the channel element (5), said adjustable distance element (19) acting together with the close-fitting element (6) so as to form an end stop, such that any adjustment movements of the close-fitting element (6) in radial direction away from the filter body (2) are limited to an adjustable degree.

7. The filter according to claim 6,
**characterised in that**
the distance element is a threaded bolt (19) which penetrates the channel element (5) in a threaded borehole, wherein the end of the threaded bolt (19), which end protrudes into the backwash channel (3), interacts with a supporting element (7) which pretensions the close-fitting element (6) which rests against it and/or which is held towards the filter body (2) using spring means (11).

## Revendications

1. Filtre pour liquides contenant des contaminants, en particulier des suspensions de lubrifiants caloporteurs contaminés, comprenant un boîtier filtrant à peu près cylindrique circulaire et un corps de filtre à peu près cylindrique circulaire entraînable en rotation, disposé dans le boîtier de façon à peu près parallèle à l'axe de ce dernier et qui sépare avec des couvercles prévus sur ses deux extrémités un espace d'afflux extérieur muni d'une admission d'un espace d'échappement intérieur muni d'une évacuation, la surface extérieure du corps de filtre entraînable en rotation pouvant être débarrassée des contaminants déposés par reflux du liquide de l'espace d'échappement dans un canal de lavage à contre-courant, monté de façon stationnaire dans le boîtier filtrant, s'étendant sur la longueur du corps de filtre, et s'appliquant de façon élastique sur la surface extérieure de ce dernier, et une sortie obturable pour des contaminants séparés étant prévue dans la zone inférieure du boîtier filtrant, **caractérisé en ce que** le canal de lavage à contre-courant (3) présente un élément de contact (6) perforé, qui s'applique élastiquement sur la surface extérieure du corps de filtre (2), et un élément de canal (5) recevant l'élément de contact et monté rigidement dans le boîtier filtrant (1).

2. Filtre suivant la revendication 1, **caractérisé en ce que** l'élément de contact (6) se compose d'un matériau à élasticité de ressort et est fixé sur l'élément de canal (5).

3. Filtre suivant la revendication 1, **caractérisé en ce que** l'élément de contact (6) est monté de façon mobile dans l'élément de canal (5) dans la direction radiale par rapport au corps de filtre (2), est étanchéifié par rapport à l'élément de canal (5), et est soumis dans la direction radiale par rapport au corps de filtre (2) à l'effet d'au moins un ressort de compression (11) supporté sur l'élément de canal (5).

4. Filtre suivant la revendication 3, **caractérisé en ce que** la mobilité de l'élément de contact (6) par rapport à l'élément de canal (5) est limitée dans la direction radiale par rapport au corps de filtre (2) par des butées (12, 14) sur l'élément de canal (5).

5. Filtre suivant l'une des revendications 1 à 4,
**caractérisé en ce qu'**une sortie (16) pour des contaminants est raccordée au canal de lavage à contre-courant (3), cette sortie comportant une vanne commutable (17) et/ou un clapet antiretour (18) réglable.

6. Filtre suivant l'une des revendications 1, 3 à 5,
**caractérisé en ce qu'**au moins un élément d'écartement ajustable (19) est monté sur l'élément de canal (5), cet élément d'écartement concourant avec l'élément de contact (6) en réalisant une butée en ce sens que des mouvements de déplacement de l'élément de contact (6), dirigés à l'écart du corps de filtre (2) dans la direction radiale, sont limités à une mesure ajustée.

7. Filtre suivant la revendication 6, **caractérisé en ce que** l'élément d'écartement est réalisé sous forme de boulon fileté (19), qui traverse l'élément de canal (5) dans un taraudage, l'extrémité du boulon fileté (19), pénétrant dans le canal de lavage à contre-courant (3), concourant alors avec un élément d'appui (7) qui précontraint l'élément de contact (6), s'appliquant et/ou maintenu sur ce dernier, par des moyens élastiques (11) contre le corps de filtre (2).
